# EUROPEAN PATENT SPECIFICATION

(11) **EP 0 338 530 B1**
(45) Date of publication and mention of the grant of the patent: **29.06.1994**
(21) Application number: 89107025.2
(22) Date of filing: 19.04.1989
(51) Int. Cl.: C08G 65/32, B01F 17/00

(54) **Fluorine-containing polyether and nonionic surfactant comprising the same**
Fluor enthaltende Polyäther und nichtionisches Tensid das sie enthält
Polyéther contenant du fluor et agent surfactif non ionique le contenant

(30) Priority: 19.04.1988 JP 97682/88
(43) Date of publication of application: 25.10.1989
(73) Proprietor: DAIKIN INDUSTRIES, LIMITED, Osaka-shi, Osaka-fu (JP)
(72) Inventor: Tohzuka, Takashi, Mishima-gun Osaka-fu (JP); Ishikawa, Sueyoshi, Kishiwada-shi Osaka-fu (JP); Yamamoto, Ikuo, Osaka-shi Osaka-fu (JP)
(74) Representative: Hansen, Bernd, Dr. Dipl.-Chem.

(56) References cited:
- FR-A- 2 344 585
- US-A- 3 644 492
- US-A- 4 079 084

## Description

The present invention relates to a novel fluorine-containing polyether and a nonionic surfactant comprising the same fluorine-containing polyether.

Since a perfluoroalkyl polyether has high electrical insulation and non-flammability, it is used in various applications, particularly an electrical application. However, the perfluoroalkyl polyether is statically charged to collect dusts. Therefore, a surfactant which can be used as an antistatic agent in the perfluoroalkyl polyether is required. However, conventional surfactants are not compatible with the perfluoroalkyl polyether and cannot be used as the antistatic agent.

US-A-3,644,492 discloses and claims fluorine-containing polyethers, for example as represented by the following formula (example 1):

F(CF₂CF₂CF₂O)[C₃F₆O]₈C₂F₄COO(CH₂CH₂O)₇CH₃

The known compounds can be used as non-ionic surfactants.

An object of the present invention is to provide a fluorine-containing polyether which can be used as the surfactant compatible with the perfluoroalkyl polyether.

The present invention comprises a
fluorine-containing polyether of the formula:

R_{f}-X-A (I)

or

A-X-R'_{f}-X-A (II)

wherein R_{f} is a group containing at least one repeating unit of the formula:

-CF₂CF₂CF₂O-

R'_{f} is a group containing at least one repeating unit selected from the group consisting of a repeating unit of the formula:

-CF₂CF₂CF₂O- (a)

a repeating unit of the formula:

-CF₂CF₂O- (b)

and a repeating unit of the formula:

-CF₂O- (c)

provided that at least one of the repeating units (a) and (b) is contained and the total number of the repeating units (a), (b) and (c) is at least three, X is -CF₂COO-, -C₂F₄COO-or -CF₂CF₂- and A is a group containing a polyalkylene glycol group.

Also, the present invention provides a non-ionic surfactant comprising said fluorine-containing polyether.

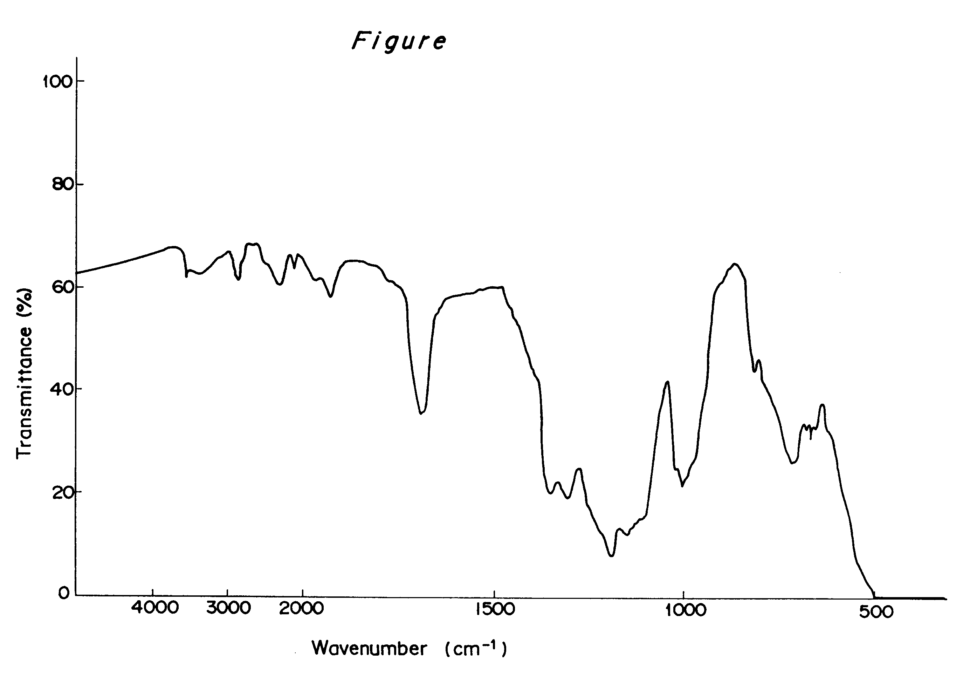

The figure is an IR chart of the fluorine-containing polyether of Example 1.

The R_{f} group is, for example, 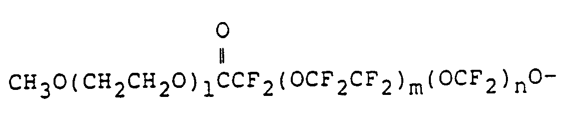
wherein l is 1 to 500, m is 0 to 200 and n is 0 to 200.

The R'_{f} group is, for example,

-O(CF₂CF₂CF₂O)ₘCF₂CF₂CF₂CF₂(OCF₂CF₂CF₂)ₘO-

wherein m is 1 to 200.

An alkylene glycol which forms the polyalkylene glycol group in the A group may be ethylene glycol or propylene glycol. The polyalkylene glycol group contains at least one repeating unit selected from the group consisting of a repeating unit of the formula:

-C₂H₄O-

and a repeating unit of the formula:

-C₃H₆O-

provided that total number of said repeating units is 2 to 500. The repeating unit: -C₃H₆O- includes -CH₂CH₂CH₂O- and -CH(CH₃)CH₂O-. The repeating unit: -C₂H₄O- is usually -CH₂CH₂O-.

The A group is, for example,

-(CH₂CH₂O)ₘCH₃

wherein m is 2 to 500,

-(CH₂CH₂O)ₘH

wherein m is 2 to 500, or 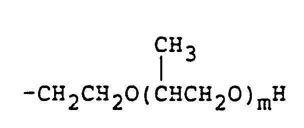
wherein m is 2 to 500.

Specific examples of the fluorine-containing polyethers (I) and (II) are

F(CF₂CF₂CF₂O)ₘCF₂CF₂COO(CH₂CH₂O)ₙCH₃

wherein m is 2 to 200, preferably 9 on the average and n is 2 to 500, preferably 9 on the average, 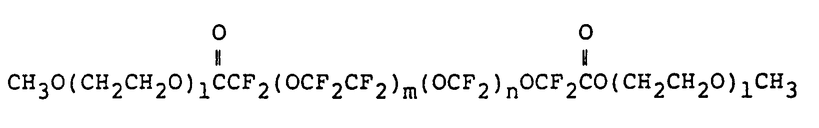
wherein m + n is 1 to 200, preferably 10 on the average and l is 2 to 500, preferably 9 on the average,

-[CF₂CF₂-(OCF₂CF₂CF₂)ₘ-OCF₂CF₂-(CH₂CH₂O)ₙ-CH₃]₂

wherein m is 2 to 200, preferably 10 on the average and n is 2 to 500, preferably 9 on the average, and 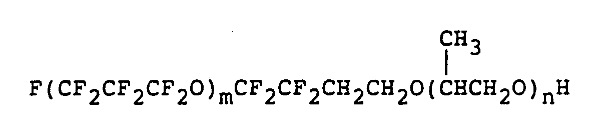
wherein m is 2 to 200, preferably 20 on the average and n is 2 to 500, preferably 10 on the average.

The fluorine-containing polyether (I) can be prepared by reacting a fluorine-containing compound of the formula:

R_{f}-X-H

with a compound of the formula:

HO-A

or reacting a fluorine-containing compound of the formula:

R_{f}-X-I

with a compound of the formula:

M-A

wherein A, R_{f} and X are the same as described above and M is an alkaline metal. The fluorine-containing polyether (II) can be prepared by reacting a fluorine-containing compound of the formula:

H-X-R′_{f}-X-H

with a compound of the formula:

HO-A

wherein A, R′_{f} and X are the same as described above. The reaction is usually carried out at a temperature of 20 to 150°C for 1 to 10 hours.

The fluorine-containing polyether according to the present invention is water-soluble and can be used as a nonionic surfactant.

The nonionic surfactant according to the present invention can be used as an antistatic agent, a surfactant for polymerization, car wax and an additive for film.

The fluorine-containing polyether according to the present invention is compatible with a perfluoroalkyl polyether and thus can be used as an antistatic agent for the perfluoroalkyl polyether. It can improve properties of a resin surface when used as an additive for resin, particularly a resin film.

### PREFERRED EMBODIMENTS OF THE INVENTION

The present invention is illustrated by following Examples.

### Example 1

To the fluorine-containing carboxylic acid:

F(CF₂CF₂CF₂O)ₘCF₂CF₂COOH

wherein m is 30 on the average (51.3 g, 10 mmol), the polyethylene glycol methyl ether:

CH₃(OCH₂CH₂)ₙOCH₂CH₂OH

wherein n is 8 on the average (10 g, 25 mmol) (Uniox 400 manufactured by Nippon oil & fats Co., Ltd.) was added and stirred. Then, concentrated sulfuric acid (5 ml) was added and the reaction was carried out at 100°C for 6 hours while stirring. The completion of the reaction was confirmed by disappearance of the absorption peak at 1780 cm⁻¹ for the carboxylic acid and appearance of the absorption peak at 1700 cm⁻¹ for the ester linkage in IR analysis. After the completion of the reaction, the reaction product was washed with a 2% aqueous solution of NaHCO₃ (50 ml) twice. A lower phase was separated and filtrated through a filter having a pore diameter of 0.2 »m to obtain the fluorine-containing polyether:

F(CF₂CF₂CF₂O)ₘCF₂CF₂COO(CH₂CH₂O)ₙ₊₁CH₃

wherein m is 30 and n is 8 on the average. Yield: 47 g (87%).

The IR chart of the resultant fluorine-containing polyether is shown in Figure.

### Example 2

A perfluoropolyether (Demnum S-65 manufactured by Daikin Industries Ltd.) (10 g) was mixed with the fluorine-containing polyether:

F(CF₂CF₂CF₂O)ₘCF₂CF₂COO(CH₂CH₂O)ₙ₊₁CH₃

wherein m is 30 and n is 8 on the average prepared in Example 1 (0.3 g), and then dissolved in trichlorotrifluoroethane (100 g). A slide glass (15 cm x 5 cm) was dipped in the solution, and dried in the air to form a film having a thickness of not less than 10 »m on the slide glass. A potential difference was measured by a potentiometer, while violently rubbing the film with a styrene resin. The potential difference was 0 V.

### Comparative Example

A film was formed and a potential difference was measured in the same manner as in Example 2 but the fluorine-containing polyether was not used. The potential difference was 400 V.

## Claims

1. A fluorine-containing polyether of the formula:
R_{f}-X-A (I)
or
A-X-R'_{f}-X-A (II)
wherein R_{f} is a group containing at least one repeating unit of the formula:
-CF₂CF₂CF₂O-
R'_{f} is a group containing at least one repeating unit selected from the group consisting of a repeating unit of the formula:
-CF₂CF₂CF₂O- (a)
a repeating unit of the formula:
-CF₂CF₂O- (b)
and a repeating unit of the formula:
-CF₂O- (c)
provided that at least one of the repeating units (a) and (b) is contained and the total number of the repeating units (a), (b) and (c) is at least three, X is -CF₂COO-, -C₂F₄COO-or -CF₂CF₂- and A is a group containing a polyalkylene glycol group.

2. The fluorine-containing polyether according to claim 1, wherein the polyalkylene glycol group in the A group contains at least one repeating unit selected from the group consisting of a repeating unit of the formula:
-C₂H₄O-
and a repeating unit of the formula:
-C₃H₆O-
provided that total number of said repeating units is 2 to 500.

3. The fluorine-containing polyether according to claim 1, therein the R_{f} group is
F(CF₂CF₂CF₂O)ₘ-
wherein m is an integer of 2 to 200, the X group is
-C₂F₄COO-
and the A group is
-(CH₂CH₂O)ₙCH₃
wherein n is an integer of 2 to 500.

4. A nonionic surfactant comprising the fluorine-containing polyether according to claim 1.

## Patentansprüche

1. Fluorhaltiger Polyether der Formel
R_{f}-X-A (I)
oder
A-X-R'_{f}-X-A (II)
worin R_{f} eine Gruppe ist enthaltend wenigstens eine wiederkehrende Einheit der Formel
-CF₂CF₂CF₂O-
R'_{f} eine Gruppe ist enthaltend wenigstens eine wiederkehrende Einheit, ausgewählt aus einer Gruppe bestehend aus einer wiederkehrenden Einheit der Formel:
-CF₂CF₂CF₂O- (a)
einer wiederkehrenden Einheit der Formel:
-CF₂CF₂O- (b)
und einer wiederkehrenden Einheit der Formel:
-CF₂O- (c)
unter der Voraussetzung, daß wenigstens eine der wiederkehrenden Einheiten (a) und (b) enthalten ist und die Gesamtzahl der wiederkehrenden Einheiten (a), (b) und (c) wenigstens drei ist, X -CF₂COO-, -C₂F₄COO- oder -CF₂CF₂-, und A eine Gruppe, enthaltend eine Polyalkylenglykolgruppe, ist.

2. Fluorhaltiger Polyether gemäß Anspruch 1, bei dem die Polyalkylenglykolgruppe in der A-Gruppe wenigstens eine wiederkehrende Einheit, ausgewählt aus der Gruppe bestehend aus der wiederkehrenden Einheit der Formel
C₂H₄O-
und einer wiederkehrenden Einheit der Formel:
-C₃H₆O-
ist, unter der Voraussetzung, daß die Gesamtzahl der wiederkehrenden Einheiten 2 bis 500 ist.

3. Fluorhaltiger Polyether gemäß Anspruch 1, bei dem die R_{f}-Gruppe
F(CF₂CF₂CF₂O)ₘ-
ist, worin m eine ganze Zahl von 2 bis 200 ist, die X-Gruppe
-C₂F₄COO-
ist und die A-Gruppe
-(CH₂CH₂O)ₙCH₃
ist, und n eine ganze Zahl von 2 bis 500 bedeutet.

4. Nichtionisches oberflächenaktives Mittel, umfassend einen fluorhaltigen Polyether gemäß Anspruch 1.

## Revendications

1. Polyéther contenant du fluor de formule :
R_{f}-X-A (I)
ou
A-X-R'_{f}-X-A (II)
dans laquelle R_{f} est un groupement contenant au moins un motif récurrent de formule :
-CF₂CF₂CF₂O-
R'_{f} est un groupement contenant au moins un motif récurrent choisi dans le groupe constitué par un motif récurrent de formule :
-CF₂CF₂CF₂O- (a)
un motif récurrent de formule :
-CF₂CF₂O- (b)
et un motif récurrent de formule
-CF₂O- (c)
à condition qu'au moins l'un des motifs récurrents (a) et (b) soit présent, et que le nombre total des motifs récurrents (a), (b) et (c) soit au moins 3, X représente -CF₂COO-, -C₂F₄COO- ou -CF₂CF₂- et A est un groupement contenant un groupement polyalkylèneglycol.

2. Polyéther contenant du fluor selon la revendication 1, dans lequel le groupement polyalkylèneglycol dans le groupement A contient au moins un motif récurrent choisi dans le groupe constitué par un motif récurrent de formule :
C₂H₄O-
et un motif récurrent de formule :
-C₃H₆O-
à la condition que le nombre total desdits motifs récurrents soit compris entre 2 et 500.

3. Polyéther contenant du fluor selon la revendication 1, dans lequel le groupement R_{f} représente
F(CF₂CF₂CF₂O)ₘ-
où m représente un nombre entier compris entre 2 et 200, le groupement X représente
-C₂F₄COO-
et le groupement A représente
-(CH₂CH₂O)ₙCH₃
où n est un nombre entier compris entre 2 et 500.

4. Tensioactif non ionique comprenant le polyéther contenant du fluor selon la revendication 1.
